# EUROPÄISCHE PATENTANMELDUNG

(11) **EP 3 081 428 A1**
(43) Veröffentlichungstag der Anmeldung: **19.10.2016**
(21) Anmeldenummer: 16155676.6
(22) Anmeldetag: 15.02.2016
(51) Int. Cl.: B60L 5/00, B60M 1/08, B60M 3/04, H02J 9/06

(54) **ANORDNUNG UND VERFAHREN FÜR EINE STROMVERSORGUNG EINER FAHRLEITUNG**

(30) Priorität: 06.03.2015 DE 102015204105
(71) Anmelder: Siemens Aktiengesellschaft, 80333 München (DE)
(72) Erfinder: Altmann, Martin, 91054 Erlangen (DE); Bianchi, Roberto, 91056 Erlangen (DE); Brodkorb, Albrecht, 99820 Hörselberg-Hainich (DE); Dillmann, Klaus-Peter, 90587 Obermichelbach (DE); Gruber, Rainer, 91560 Heilsbronn (DE)

(57) **Zusammenfassung**

Gegenstand der vorliegenden Erfindung ist eine Anordnung (1) für eine Stromversorgung einer Fahrleitung (3,4,5), mit energietechnischen Einrichtungen (11) für einen Anschluss der Fahrleitung (3,4,5) an ein Energieversorgungsnetz (10), und mit einer Steuerungseinrichtung (12),dadurch gekennzeichnet, dass die Steuerungseinrichtung (12) geeignet ist, die energietechnischen Einrichtungen (11) bei Befahren der Fahrleitung (3,4,5) durch ein elektrisch angetriebenes Fahrzeug (8) einzuschalten.

Ferner ist ein entsprechendes Verfahren für eine Stromversorgung einer Fahrleitung Gegenstand der Erfindung.

## Beschreibung

Bei einer Bahnstromversorgung wird i.d.R. ein Unterwerk vorgesehen, das einen oder mehrere Speiseabschnitte einer Bahnstrecke mit elektrischer Energie versorgt. An der Bahnstrecke sind Fahrleitungen bzw. Oberleitungen installiert, aus denen ein Schienenfahrzeug mittels eines Stromabnehmers elektrische Energie für seinen Antrieb abziehen kann.

Dabei werden Unterwerke entlang der Bahnstrecke im dauerhaft eingeschalteten Zustand betrieben. Insbesondere sind dabei die Anschlüsse von Transformatoren des Unterwerks an das Energieversorgungsnetz stets unter Spannung; Umrichter oder Symmetriereinrichtungen bzw. Balancer sind aktiv geschaltet. Weiterhin ist die Schaltanlage durchgeschaltet und dadurch die Fahrleitung unter Spannung. Dabei verursachen alle Komponenten (insbesondere Transformatoren und Fahrleitung) energetische Verluste.

Aus der Produktbroschüre "SITRAS RSC - Leitsystem und Stationsbedienung für die Bahnstromversorgung und Bahninfrastruktur" aus 2013, Kennnummer A6Z00034488838, ist ein Leitstellensystem für die Überwachung einer Bahnstromversorgung bekannt.

Aus der DE10139318 A1 ist ferner eine Anordnung für eine Stromversorgung einer Fahrleitung, mit energietechnischen Einrichtungen für einen Anschluss der Fahrleitung an ein Energieversorgungsnetz und mit einer Steuerungseinrichtung bekannt. Dabei wird insbesondere auf eine Stromversorgung bei einer Magnetschwebebahn abgestellt; entsprechend ist die Fahrleitung als eine Versorgungsleitung für mehrere getrennt ausschaltbare Speiseabschnitte ausgebildet. Die Steuereinrichtung wird eingesetzt, um die einzelnen Speiseabschnitte zeitlich nacheinander zu aktivieren. Weiterhin werden verschiedene Möglichkeiten einer Fehlererkennung an der Fahrleitung offenbart.

Ferner ist es aus dem Fachartikel "IEC 61850 On Wheels: The Integrated Traction Protection Network" von D B Hewings von Network Rail UK, erschienen in "Developments in Power System Protection (DPSP 2014), 12th IET International Conference", 31.03.2014-03.04.2014, bekannt, Züge und Unterwerke mit erweiterten Kommunikationsmöglichkeiten im IEC 61850 Standard auszurüsten.

An die Erfindung stellt sich die Aufgabe, eine Anordnung für eine Stromversorgung einer Fahrleitung mit Energietechnischen Einrichtungen für einen Anschluss der Fahrleitung an ein Energieversorgungsnetz und mit einer Steuerungseinrichtung anzugeben, die vergleichsweise besonders energiesparend betrieben werden kann.

Die Erfindung löst diese Aufgabe durch eine gattungsgemäße Anordnung mit einer Steuerungseinrichtung, die geeignet ist, die energietechnischen Einrichtungen bei Befahren der Fahrleitung durch ein elektrisch angetriebenes Fahrzeug einzuschalten.

Energietechnische Einrichtungen im Sinne der Erfindung sind beispielsweise Transformatoren, Umrichter und Symetriereinrichtungen, die einem Unterwerk einer Bahnstromversorgung zugeordnet sind. Die energietechnischen Einrichtungen können jedoch auch großräumiger verteilt angeordnet sein. Die Steuerungseinrichtung ist eine Recheneinrichtung wie etwa ein Computer mit Datenspeicher, die dezentral bei den energietechnischen Einrichtungen angeordnet sein kann oder auch zentral einer Leitstelle. Insbesondere kann die Steuerungseinrichtung auch als Softwarekomponente innerhalb eines Cloud-Computing Systems bereit gehalten werden. In einem solchen Fall werden in der Regel Anforderungen für kurze Reaktionszeiten, insbesondere im sogenannten Echtzeitbereich, an die Cloud gestellt werden.

Ein Einschalten der energietechnischen Einrichtungen erfolgt also zum Beispiel zeitlich kurz vor dem Befahren eines Abschnitts der Fahrleitung durch ein elektrisch angetriebenes Fahrzeug. Dabei sollte i.d.R. der Zeitpunkt, zu dem eingeschaltet wird, eine Zeitpanne bis zum Befahren durch das Fahrzeug freilassen, die mindestens so lange dauert wie das vollstände Einschalten und Hochfahren aller benötigten energietechnischen Einrichtungen. Auf diese Weise steht dem Fahrzeug beim Eintritt in den betreffenden Bereich stets die volle benötigte elektrische Leistung zur Verfügung; es ist ein im Wesentlichen ruckfreier Übergang zwischen Fahrleitungsabschnitten gewährleistet.

Die energietechnischen Einrichtungen versorgen die Fahrleitung anschließend typischerweise so lange mit Energie, bis das elektrisch angetriebene Fahrzeug dieses Abschnitt der Fahrleitung wieder verlassen hat. Darüber hinaus kann eine Zeitspanne vorgesehen werden, die für eine vorher bestimmte kurze Sicherheitszeit alle energietechnischen Einrichtungen eingeschaltet lässt, wenn das Fahrzeug den Fahrleitungsabschnitt verlassen hat.

Für das Zuschalten und das Bereitstellen der Energieversorgung können verschiedene Strategien im Fehlerfall durch Nutzung der Redundanzen im Unterwerk oder entlang der Strecke implementiert und berücksichtigt werden. Dabei kann z.B. eine Umschaltung auf einen anderen Transformator erfolgen. Bei entsprechender Ausgestaltung der Bahnstromversorgung mit positive und negative Feeder kann eine Umschaltung auf den negative Feeder oder eine Umgehungsschiene zur Überbrückung eines fehlerbehafteten Abschnitts erfolgen.

Es ist ein Vorteil der erfindungsgemäßen Anordnung, dass der operative Betrieb der Bahnstromversorgung dynamisch an den Bedarf angepasst werden kann - es entstehen nur dann energetische Verluste, wenn auch tatsächlich ein Schienenfahrzeug den Streckenabschnitt befährt.

In einer bevorzugten Ausführungsform der erfindungsgemäßen Anordnung weist die Fahrleitung Speiseabschnitte auf und die Steuerungseinrichtung ist geeignet, jeweils für einen Speiseabschnitt ein zeitlich kurz bevorstehendes Befahren festzustellen. Dies ist ein Vorteil, weil jeweils nur der aktuell bevorstehend benötigte Speiseabschnitt eingeschaltet wird. Es werden energetische Verluste vermindert. Dabei kann z.B. die Steuerungseinrichtung derart ausgeführt sein, dass sie durch das Fahrzeug Informationen über die Position und die Geschwindigkeit des Fahrzeugs erhält, woraus die Steuereinrichtung einen Einschaltpunkt für den zeitlich kurz bevorstehend genutzten Speiseabschnitt ermittelt. Alternativ oder zusätzlich zu diesem Ansatz kann das Fahrzeug auch selbstständig den zeitlich kurz bevorstehend genutzten Speiseabschnitt ermitteln und der Steuereinrichtung mitteilen, damit diese den betreffenden Speiseabschnitt einschaltet.

In einer anderen bevorzugten Ausführungsform der erfindungsgemäßen Anordnung ist die Steuerungseinrichtung eingerichtet, von einer Leitstelle mittels einer ersten Kommunikationsverbindung Informationen über das Befahren des jeweiligen Speiseabschnitts zu erhalten. Dies ist ein Vorteil, weil bei einer Leitstelle einer Bahnstromversorgung und/oder eines Fahrzeugleitsystems stets aktuelle Informationen über die Position und Geschwindigkeit sowie ggf. über Fahrpläne, Halteorte und Haltezeiten der Fahrzeuge verfügbar sind. Bei der ersten Kommunikationsverbindung handelt es sich bevorzugt um eine Funkverbindung, insbesondere eine Mobilfunkverbindung nach dem GSM, G3, G4(LTE) oder entsprechend weiter fortgeschrittenen Standards. Auch möglich sind Verbindungen nach Internetübertragungsprotokollen. Die Leitstelle muss entsprechend mindestens eine Sendeeinrichtung und die Steuerungseinrichtung - oder eine mit der Steuerungseinrichtung verbundene separate Kommunikationseinrichtung - mindestens eine Empfangseinrichtung aufweisen. Bevorzugt ist es, wenn sowohl Leitstelle als auch Steuerungseinrichtung für bidirektionale Kommunikation ausgelegt sind, also senden und empfangen können. Die Daten können dabei beispielsweise mittels des IEC 61850 Standards übertragen werden.

In einer weiteren bevorzugten Ausführungsform der erfindungsgemäßen Anordnung ist die Steuerungseinrichtung eingerichtet, von dem elektrisch angetriebenen Fahrzeug mittels einer zweiten Kommunikationsverbindung Informationen über das Befahren des jeweiligen Speiseabschnitts zu erhalten. Bei der ersten Kommunikationsverbindung handelt es sich bevorzugt um eine Funkverbindung, insbesondere eine Mobilfunkverbindung nach dem GSM, G3, G4(LTE) oder entsprechend weiter fortgeschrittenen Standards. Auch möglich sind Verbindungen nach Internetübertragungsprotokollen. Das Fahrzeug muss entsprechend mindestens eine Sendeeinrichtung und die Steuerungseinrichtung - oder eine mit der Steuerungseinrichtung verbundene separate Kommunikationseinrichtung - mindestens eine Empfangseinrichtung aufweisen. Bevorzugt ist es, wenn sowohl Fahrzeug als auch Steuerungseinrichtung für bidirektionale Kommunikation ausgelegt sind, also senden und empfangen können.

In einer Weiterbildung der oben genannten Ausführungsform sind sowohl Leitstelle als auch Fahrzeug ausgerüstet, Informationen an die Steuerungseinrichtung zu übermitteln. Diese redundante Informationsübermittlung hat den Vorteil, besonders sicher und zuverlässig zu sein.

In einer weiteren bevorzugten Ausführungsform der erfindungsgemäßen Anordnung ist die Steuerungseinrichtung eingerichtet, ein Einschalten der energietechnischen Einrichtungen dem elektrisch angetriebenen Fahrzeug mittels einer dritten Kommunikationsverbindung anzuzeigen. Dabei kann die eingangs ausführlich erläuterte zweite Kommunikationsverbindung eingesetzt werden - zweite und dritte Kommunikationsverbindung sind dann identisch - oder es kann eine separate Kommunikationsverbindung vorgesehen sein.

Insbesondere kann die Steuerungseinrichtung der Leitstelle übermitteln, dass die energietechnischen Einrichtungen eingeschaltet werden /wurden /sind. Anschließend gibt die Leitstelle diese Informationen weiter an das Fahrzeug.

In einer weiteren bevorzugten Ausführungsform der erfindungsgemäßen Anordnung sind die energietechnischen Einrichtungen derart ausgebildet, dass das Einschalten der energietechnischen Einrichtungen bis zur Herstellung einer Befahrungsbereitschaft weniger als 20 s dauert. Dies ist ein Vorteil, weil auf diese Weise besonders wenig Energie für einen Fahrleitungsabschnitt aufgewendet werden muss. Die zeitlichen Anforderungen an die Herstellung der Befahrungsbereitschaft können auch an die Geschwindigkeit der ankommenden Züge angepasst werden.

In einer weiteren bevorzugten Ausführungsform der erfindungsgemäßen Anordnung ist die Steuerungseinrichtung geeignet, bei Nicht-Befahren der Fahrleitung die energietechnischen Einrichtungen abzuschalten. Dies ist vorteilhaft, weil so sichergestellt wird, dass nur energetische Verluste auftreten, wenn die Fahrleitung bzw. Fahrleitungsabschnitte tatsächlich benötigt werden.

In einer weiteren bevorzugten Ausführungsform der erfindungsgemäßen Anordnung ist die Steuerungseinrichtung geeignet, bei Nicht-Befahren der Fahrleitung die energietechnischen Einrichtungen teilweise abzuschalten. Eine teilweise Abschaltung ist von Vorteil, weil beispielsweise ein Transformator abgeschaltet werden kann, während ein Umrichter im betriebsbereiten Zustand gehalten wird. Dabei ist es vorteilhaft, insbesondere Geräte mit einem hohen Zeitbedarf für ein Hochfahren auf den betriebsbereiten Zustand nicht abzuschalten.

In einer weiteren bevorzugten Ausführungsform der erfindungsgemäßen Anordnung ist die Steuerungseinrichtung geeignet, bei Nicht-Befahren der Fahrleitung die energietechnischen Einrichtungen in einen Standby-Betrieb zu schalten, aus dem im Vergleich zum abgeschalteten Zustand ein schnelleres Einschalten möglich ist. Dies ist ein Vorteil, weil ein Standby-Betrieb besonders energiesparend ist und gleichzeitig kurze Einschaltzeiten gewährleistet. Dabei kann in Abhängigkeit von der Befahrungshäufigkeit und anderen Faktoren z.B. ein Unterwerk betriebsbereit, die Fahrleitung abgeschaltet oder nur ein Leistungstransformator des Unterwerks in Betrieb gehalten werden.

In einer weiteren bevorzugten Ausführungsform der erfindungsgemäßen Anordnung ist die Steuerungseinrichtung geeignet, einen Energieverlust im Betrieb der Stromversorgung der Fahrleitung zu minimieren.

In einer weiteren bevorzugten Ausführungsform der erfindungsgemäßen Anordnung ist eine Prüfeinrichtung vorgesehen, die geeignet ist, im eingeschalteten oder teilweise eingeschalteten oder Standby-Zustand der energietechnischen Einrichtungen eine für diesen Zustand spezifische Kurzschlussprüfung der Fahrleitung vorzunehmen und im abgeschalteten Zustand der energietechnischen Einrichtungen eine für den abgeschalteten Zustand spezifische Kurzschlussprüfung der Fahrleitung vorzunehmen. Hierdurch kann für den Schutz in besonderen Speiseabschnitten wie etwa besonders langen Speiseabschnitten, in denen Fehler an der Fahrleitung kaum von Betriebsfällen der fahrenden Züge und den resultieren Strömen unterschieden werden können, eine besonders sichere und genaue Erkennung von Kurzschlüssen sicher gestellt werden. Manche Bahnbetreiber wie z.B. die Deutsche Bahn nehmen bereits vor jedem Einschaltvorgang eine Prüfung der Oberleitung vor. Eine solche Prüfung kann auch bei der erfindungsgemäßen Anordnung vorgesehen werden.

Mit diesem Konzept lassen sich verschiedene Aspekte des Betriebs optimieren. Die Verlustleistungen der Transformatoren, aktiver Komponenten wie Umrichter oder Balancer sowie der Fahrleitung können minimiert werden. Gleichzeitig bietet ein entsprechendes Schutzkonzept die Möglichkeit, Parameter für einen Standby Modus besonders genau einzustellen, um Fehler frühzeitig festzustellen. Dagegen sind dann im operativen Betrieb die Schutzparameter auf die Erkennung von Fehlern bei der Durchfahrt von Zügen ausgelegt.

In einer weiteren bevorzugten Ausführungsform der erfindungsgemäßen Anordnung umfassen die energietechnischen Einrichtungen Transformatoren.

In einer weiteren bevorzugten Ausführungsform der erfindungsgemäßen Anordnung umfassen die energietechnischen Einrichtungen Umrichter.

In einer weiteren bevorzugten Ausführungsform der erfindungsgemäßen Anordnung umfassen die energietechnischen Einrichtungen Symmetriereinrichtungen.

In einer weiteren bevorzugten Ausführungsform der erfindungsgemäßen Anordnung ist das elektrisch angetriebene Fahrzeug ein Schienenfahrzeug. Beispielsweise kann das Straßenfahrzeug ein Zug oder eine Straßenbahn oder eine Untergrundbahn sein.

In einer weiteren bevorzugten Ausführungsform der erfindungsgemäßen Anordnung ist das elektrisch angetriebene Fahrzeug ein Straßenfahrzeug. Beispielsweise kann das Straßenfahrzeug ein Elektrobus, ein Minenlastkraftfahrzeug mit Stromabnehmer oder eine zumindest teilweise elektrisch angetriebener Lastkraftwagen sein.

Ferner stellt sich an die Erfindung die Aufgabe, ein Verfahren für eine Stromversorgung einer Fahrleitung mit energietechnischen Einrichtungen für einen Anschluss der Fahrleitung an ein Energieversorgungsnetz und mit einer Steuerungseinrichtung anzugeben, das vergleichsweise besonders energiesparend betrieben werden kann.

Die Erfindung löst diese Aufgabe durch ein Verfahren nach Anspruch 12.

Es ergeben sich für das erfindungsgemäße Verfahren und seine im Folgenden dargestellten Ausführungsformen jeweils sinngemäß die gleichen Vorteile wie eingangs für die erfindungsgemäße Anordnung erläutert.

In einer bevorzugten Ausführungsform des erfindungsgemäßen Verfahrens weist die Fahrleitung Speiseabschnitte auf und mittels der Steuerungseinrichtung wird jeweils für einen Speiseabschnitt ein zeitlich kurz bevorstehendes Befahren festgestellt.

In einer bevorzugten Ausführungsform des erfindungsgemäßen Verfahrens erhält die Steuerungseinrichtung von einer Leitstelle mittels einer ersten Kommunikationsverbindung Informationen über das Befahren des jeweiligen Speiseabschnitts.

In einer bevorzugten Ausführungsform des erfindungsgemäßen Verfahrens erhält die Steuerungseinrichtung von dem elektrisch angetriebenen Fahrzeug mittels einer zweiten Kommunikationsverbindung Informationen über das Befahren des jeweiligen Speiseabschnitts.

In einer bevorzugten Ausführungsform des erfindungsgemäßen Verfahrens zeigt die Steuerungseinrichtung ein Einschalten der energietechnischen Einrichtungen dem elektrisch angetriebenen Fahrzeug mittels einer dritten Kommunikationsverbindung an.

In einer bevorzugten Ausführungsform des erfindungsgemäßen Verfahrens dauert das Einschalten der energietechnischen Einrichtungen bis zur Herstellung einer Befahrungsbereitschaft weniger als 20 s.

In einer bevorzugten Ausführungsform des erfindungsgemäßen Verfahrens schaltet die Steuerungseinrichtung bei Nicht-Befahren der Fahrleitung die energietechnischen Einrichtungen ab.

In einer bevorzugten Ausführungsform des erfindungsgemäßen Verfahrens schaltet die Steuerungseinrichtung bei Nicht-Befahren der Fahrleitung die energietechnischen Einrichtungen teilweise ab.

In einer bevorzugten Ausführungsform des erfindungsgemäßen Verfahrens schaltet die Steuerungseinrichtung bei Nicht-Befahren der Fahrleitung die energietechnischen Einrichtungen in einen Standby-Betrieb, aus dem im Vergleich zum abgeschalteten Zustand ein schnelleres Einschalten möglich ist.

In einer bevorzugten Ausführungsform des erfindungsgemäßen Verfahrens minimiert die Steuerungseinrichtung einen Energieverlust im Betrieb der Stromversorgung der Fahrleitung.

In einer bevorzugten Ausführungsform des erfindungsgemäßen Verfahrens wird mittels einer Prüfeinrichtung im eingeschalteten oder teilweise eingeschalteten oder Standby-Zustand der energietechnischen Einrichtungen eine für diesen Zustand spezifische Kurzschlussprüfung der Fahrleitung vorgenommen und es wird im abgeschalteten Zustand der energietechnischen Einrichtungen eine für den abgeschalteten Zustand spezifische Kurzschlussprüfung der Fahrleitung vorgenommen.

Im Folgenden wird ein bevorzugtes Ausführungsbeispiel der erfindungsgemäßen Anordnung durch eine Figur näher erläutert. Dem Fachmann ist dabei offensichtlich, dass das Ausführungsbeispiel keine Einschränkung der Erfindung auf eine bestimmte Merkmalskombination beabsichtigt, sondern vielmehr mit allen im Beschreibungsteil erläuterten Ausführungsformen kombiniert werden kann.

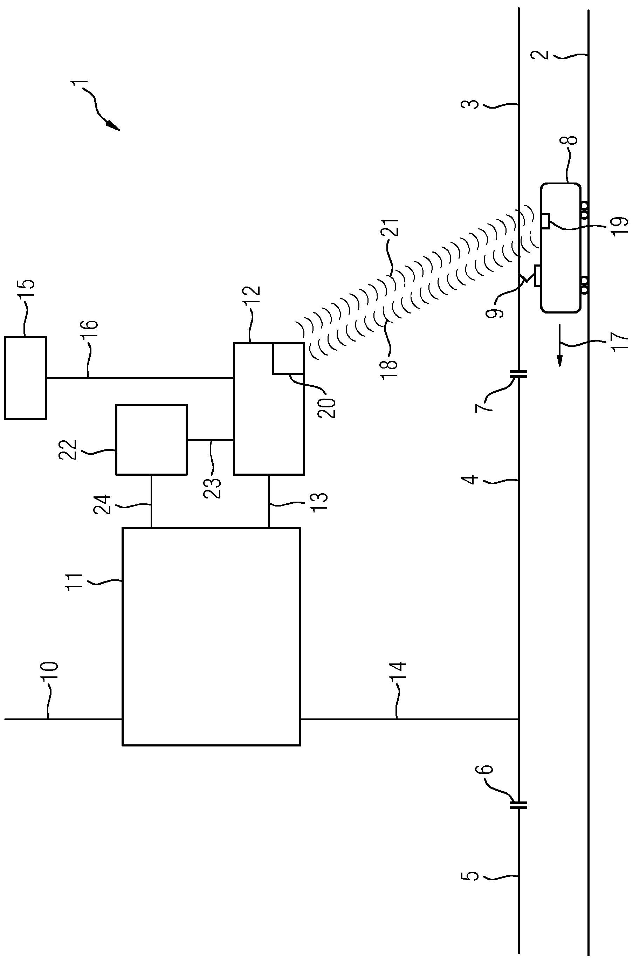

In der Figur sind in der Anordnung 1 Gleise 2 abgebildet, auf denen ein Fahrzeug 8 - im gezeigten Fall ein Zug - in Richtung des Pfeils 17 von rechts nach links fährt. Der Zug 8 weist einen Stromabnehmer 9 und eine fahrzeugseitige Kommunikationseinrichtung 19 auf. Der Stromabnehmer entnimmt für den Antrieb des Zuges elektrische Energie aus einer Fahrleitung 3,4,5 , die sich in durch Trennstellen 6,7 getrennte Speiseabschnitte 3,4,5 aufteilt. Der Speiseabschnitt 4 ist durch die Leitung 14 mit energietechnischen Einrichtungen 11 verbunden, die die Fahrleitung mit einem Energieversorgungsnetz 10 verbinden. Eine Steuerungseinrichtung 12 mit einer steuerungsseitigen Kommunikationseinrichtung 20 ist über eine Kommunikationsverbindung 13 mit den energietechnischen Einrichtungen 11 verbunden. Eine Leitstelle 15 ist mittels einer ersten Kommunikationsverbindung 16 mit der Steuerungseinrichtung 12 verbunden. Die steuerungsseitige und die fahrzeugseitige Kommunikationseinrichtung sind über die zweiten und dritten Kommunikationsverbindungen 18,21 verbunden. Dabei ist die zweite Kommunikationsverbindung 18 unidirektional vom Fahrzeug 8 zur Steuerungseinrichtung 12 gerichtet, während die dritte Kommunikationsverbindung 21 in umgekehrter Richtung ausgerichtet ist. Zweckmäßigerweise werden in diesem Beispiel bei Kommunikationsverbindungen 18,21 durch eine einzige bidirektionale Funkverbindung gebildet. Angeschlossen an die Steuereinrichtung 12 und die energietechnischen Einrichtungen 11 ist eine Prüfeinrichtung 22; dabei kommen die Leitungen 23 und 24 zum Einsatz.

Im Folgenden soll nun kurz auf die Funktionsweise der Anordnung 1 eingegangen werden.

Nähert sich der Zug 8 nach links fahrend dem Ende des Speiseabschnitts 3 dem Speiseabschnitt 4, so wird dies mittels der fahrzeugseitigen Kommunikationseinrichtung 18 über die zweite Kommunikationsverbindung 18 der Steuerungseinrichtung 12 mitgeteilt. Diese schaltet die vormals abgeschalteten oder in einem Standy-Betrieb befindlichen energietechnischen Einrichtungen 11 für den Speiseabschnitt 4 so rechtzeitig ein, dass für den Zug beim passieren der Trennstelle 7 eine weitgehend unterbrechungsfreie Überfahrt in den Speiseabschnitt 4, der dann bereits voll eingeschaltet ist, sicher gestellt ist. Die Steuerungseinrichtung meldet die erfolgte Einschaltung über die dritte Kommunikationsverbindung 21 zurück an den Zug 8. Zusätzlich oder alternativ zu den von dem Zug 8 übermittelten Informationen erhält die Steuerungseinrichtung 12 von der Leitstelle 15 Informationen über die Position und Geschwindigkeit des Zuges 8, um den Speiseabschnitt 4 rechtzeitig einschalten zu können.

Verlässt der Zug 8 den Speiseabschnitt 4, so wird dies durch den Zug 8und/oder die Leitstelle 15 der Steuerungseinrichtung 12 übermittelt, so dass der Speiseabschnitt 4 kurz nachdem der Zug diesen verlassen hat, abgeschaltet werden kann. Auf diese Weise wird sichergestellt, dass der Speiseabschnitt 4 nur dann betriebsbereit geschaltet ist, wenn ihn auch tatsächlich ein Zug 8 befährt. Energetische Verluste werden auf diese Weise minimiert, was Kosten im Betrieb senkt, die Umwelt schon und einen geringeren Verschleiß sowie größere Wartungsintervalle der energietechnischen Einrichtungen 11 ermöglicht.

## Patentansprüche

1. Anordnung (1) für eine Stromversorgung einer Fahrleitung (3, 4, 5),
mit energietechnischen Einrichtungen (11) für einen Anschluss der Fahrleitung (3,4,5) an ein Energieversorgungsnetz (10),
und mit einer Steuerungseinrichtung (12),
**dadurch gekennzeichnet, dass**
die Steuerungseinrichtung (12) geeignet ist, die energietechnischen Einrichtungen (11) bei Befahren der Fahrleitung (3,4,5) durch ein elektrisch angetriebenes Fahrzeug (8) einzuschalten.

2. Anordnung (1) nach Anspruch 1, **dadurch gekennzeichnet, dass** die Fahrleitung (3,4,5) Speiseabschnitte (3,4,5) aufweist und die Steuerungseinrichtung (12) geeignet ist, jeweils für einen Speiseabschnitt (3,4,5) ein zeitlich kurz bevorstehendes Befahren festzustellen.

3. Anordnung (1) nach Anspruch 2, **dadurch gekennzeichnet, dass** die Steuerungseinrichtung (12) eingerichtet ist, von einer Leitstelle (15) mittels einer ersten Kommunikationsverbindung (16) Informationen über das Befahren des jeweiligen Speiseabschnitts (3,4,5) zu erhalten.

4. Anordnung (1) nach Anspruch 2 oder 3, **dadurch gekennzeichnet, dass** die Steuerungseinrichtung (12) eingerichtet ist, von dem elektrisch angetriebenen Fahrzeug (8) mittels einer zweiten Kommunikationsverbindung (18) Informationen über das Befahren des jeweiligen Speiseabschnitts (3,4,5) zu erhalten.

5. Anordnung (1) nach einem der vorhergehenden Ansprüche 2 bis 4, **dadurch gekennzeichnet, dass** die Steuerungseinrichtung (12) eingerichtet ist, ein Einschalten der energietechnischen Einrichtungen (11) dem elektrisch angetriebenen Fahrzeug (8) mittels einer dritten Kommunikationsverbindung (21) anzuzeigen.

6. Anordnung (1) nach einem der vorhergehenden Ansprüche, **dadurch gekennzeichnet, dass** die energietechnischen Einrichtungen derart ausgebildet sind, dass das Einschalten der energietechnischen Einrichtungen bis zur Herstellung einer Befahrungsbereitschaft weniger als 20 s dauert.

7. Anordnung (1) nach einem der vorhergehenden Ansprüche, **dadurch gekennzeichnet, dass** die Steuerungseinrichtung (12) geeignet ist, bei Nicht-Befahren der Fahrleitung (3,4,5) die energietechnischen Einrichtungen (11) abzuschalten.

8. Anordnung (1) nach einem der vorhergehenden Ansprüche 1 bis 7, **dadurch gekennzeichnet, dass** die Steuerungseinrichtung (12) geeignet ist, bei Nicht-Befahren der Fahrleitung (3,4,5) die energietechnischen Einrichtungen (11) teilweise abzuschalten.

9. Anordnung (1) nach einem der vorhergehenden Ansprüche, **dadurch gekennzeichnet, dass** die Steuerungseinrichtung (12) geeignet ist, bei Nicht-Befahren der Fahrleitung (3,4,5) die energietechnischen Einrichtungen (11) in einen Standby-Betrieb zu schalten, aus dem im Vergleich zum abgeschalteten Zustand ein schnelleres Einschalten möglich ist.

10. Anordnung (1) nach einem der vorhergehenden Ansprüche, **dadurch gekennzeichnet, dass** die Steuerungseinrichtung (12) geeignet ist, einen Energieverlust im Betrieb der Stromversorgung der Fahrleitung zu minimieren.

11. Anordnung (11) nach einem der vorhergehenden Ansprüche, **dadurch gekennzeichnet, dass** eine Prüfeinrichtung (22) vorgesehen ist, die geeignet ist,
im eingeschalteten oder teilweise eingeschalteten oder Standby-Zustand der energietechnischen Einrichtungen (11) eine für diesen Zustand spezifische Kurzschlussprüfung der Fahrleitung (3,4,5) vorzunehmen
und im abgeschalteten Zustand der energietechnischen Einrichtungen (11) eine für den abgeschalteten Zustand spezifische Kurzschlussprüfung der Fahrleitung (3,4,5) vorzunehmen.

12. Verfahren für eine Stromversorgung einer Fahrleitung (3,4,5), wobei energietechnische Einrichtungen (11) für einen Anschluss der Fahrleitung (3,4,5) an ein Energieversorgungsnetz (10) und eine Steuerungseinrichtung (12) verwendet werden,
**dadurch gekennzeichnet, dass**
mittels der Steuerungseinrichtung (12) die energietechnischen Einrichtungen (12) bei Befahren der Fahrleitung (3,4,5) durch ein elektrisch angetriebenes Fahrzeug (8) eingeschaltet werden.

13. Verfahren nach Anspruch 12, **dadurch gekennzeichnet, dass** die Fahrleitung (3,4,5) Speiseabschnitte (3,4,5) aufweist und mittels der Steuerungseinrichtung (12) jeweils für einen Speiseabschnitt (3,4,5) ein zeitlich kurz bevorstehendes Befahren festgestellt wird.

14. Verfahren nach Anspruch 12 oder 13, **dadurch gekennzeichnet, dass** die Steuerungseinrichtung (12) bei Nicht-Befahren der Fahrleitung (3,4,5) die energietechnischen Einrichtungen (11) abschaltet.

15. Verfahren nach einem der Ansprüche 12 bis 14, **dadurch gekennzeichnet, dass** die Steuerungseinrichtung (12) bei Nicht-Befahren der Fahrleitung (3,4,5) die energietechnischen Einrichtungen (11) in einen Standby-Betrieb schaltet, aus dem im Vergleich zum abgeschalteten Zustand ein schnelleres Einschalten möglich ist.
